# EUROPEAN PATENT APPLICATION

(11) **EP 4 506 395 A1**
(43) Date of publication of application: **12.02.2025**
(21) Application number: 23780193.1
(22) Date of filing: 24.03.2023
(51) Int. Cl.: C08J 3/12

(54) **CROSSLINKED RESIN PARTICLES AND METHOD FOR PRODUCING SAME**

(30) Priority: 29.03.2022 JP 2022053572
(71) Applicant: Kaneka Corporation, Osaka-shi, Osaka 530-8288 (JP)
(72) Inventor: SONOYAMA, Arisa, Osaka 566-0072 (JP)
(74) Representative: Vossius & Partner Patentanwälte Rechtsanwälte mbB
(86) International application number: PCT/JP2023/011870
(87) International publication number: WO 2023/190183

(57) **Abstract**

Provided are crosslinked resin particles containing a polyhydroxyalkanoate resin and having a gel fraction of 50% or more and a volume mean diameter of 0.1 to 10 µm. The polyhydroxyalkanoate resin may be a poly(3-hydroxyalkanoate) resin. The crosslinked resin particles can be produced by crosslinking the polyhydroxyalkanoate resin in the presence of a peroxide in an aqueous dispersion of particles of the polyhydroxyalkanoate resin.

## Description

### Technical Field

The present invention relates to crosslinked resin particles and method for producing the crosslinked resin particles.

### Background Art

It is conventionally known that introduction of a crosslinked structure into a resin can improve the properties such as hardness, heat resistance, and solvent resistance of the resin. Small-diameter resin particles made with such a resin having a crosslinked structure are used as various products such as a thermoplastic resin modifier, a spacer, an anti-blocking agent, and a delustering agent.

Known examples of the resin material forming such crosslinked resin particles include an acrylic resin, an acrylic-silicone resin, and polystyrene (see Patent Literatures 1 and 2, for example).

In the meanwhile, waste plastics have caused an adverse impact on the global environment, for example, by affecting ecosystems, emitting hazardous gases during combustion, or generating a huge amount of combustion heat which is partially responsible for global warming. As materials that can be a solution to this problem, biodegradable plastics are under active development.

Patent Literature 3 teaches that a poly(3-hydroxyalkanoate), which is a biodegradable plastic, is melted and kneaded in the presence of an organic peroxide to crosslink the resin. However, Patent Literature 3 states that the crosslinked resin produced by melting and kneading is used to make a film or sheet, and is silent about production of small-diameter crosslinked resin particles.

### Citation List

### Patent Literature

PTL 1: Japanese Laid-Open Patent Application Publication No. 2009-56770
PTL 2: Japanese Laid-Open Patent Application Publication No. 2003-82191
PTL 3: WO 2019/022008

### Summary of Invention

### Technical Problem

There are no known small-diameter crosslinked resin particles made with a biodegradable plastic and having biodegradability.

In view of the above circumstances, the present invention aims to provide novel crosslinked resin particles having biodegradability.

### Solution to Problem

As a result of intensive studies, the present inventors have succeeded in producing novel crosslinked resin particles by using a polyhydroxyalkanoate resin which is a biodegradable resin, and have completed the present invention.

Specifically, the present invention relates to crosslinked resin particles containing a polyhydroxyalkanoate resin, wherein the crosslinked resin particles have a gel fraction of 50% or more and a volume mean diameter of 0.1 to 10 µm.

The present invention also relates to an aqueous dispersion containing an aqueous medium and the crosslinked resin particles dispersed in the aqueous medium.

The present invention further relates to a method for producing the crosslinked resin particles, the method including the step of crosslinking the polyhydroxyalkanoate resin in the presence of a peroxide in an aqueous dispersion of particles of the polyhydroxyalkanoate resin.

### Advantageous Effects of Invention

The present invention can provide novel crosslinked resin particles having biodegradability.

### Description of Embodiments

Hereinafter, an embodiment of the present invention will be described. The present invention is not limited to the embodiment described below.

### <Crosslinked Resin Particles>

Crosslinked resin particles according to the present embodiment are particles made using a polyhydroxyalkanoate resin as a main resin component. The polyhydroxyalkanoate resin may be hereinafter abbreviated as "PHA".

### <PHA>

The "PHA" generically refers to a polymer containing a hydroxyalkanoic acid as a monomer unit and is generally biodegradable. The PHA is an aliphatic polyester and preferably a polyester containing no aromatic ring.

Examples of the PHA include, but are not limited to, polyglycolic acid, a poly(3-hydroxyalkanoate) resin, and a poly(4-hydroxyalkanoate) resin. One PHA may be used alone or two or more PHAs may be used in combination. The poly(3-hydroxyalkanoate) resin is preferred. The poly(3-hydroxyalkanoate) resin may be hereinafter abbreviated as "P3HA".

The P3HA is a polyhydroxyalkanoate containing 3-hydroxyalkanoic acid repeating units represented by [-CHR-CH₂-CO-O-] (wherein R is an alkyl group represented by CₙH₂ₙ₊₁ and n is an integer from 1 to 15) as essential repeating units. The P3HA preferably contains 50 mol% or more, more preferably 70 mol% or more, of the 3-hydroxyalkanoic acid repeating units in total monomer repeating units (100 mol%).

Examples of the P3HA include, but are not limited to, poly(3-hydroxybutyrate) abbreviated as P3HB and poly(3-hydroxybutyrate-co-3-hydroxyhexanoate) abbreviated as P3HB3HH. One P3HA may be used alone or two or more P3HAs may be used in combination.

The P3HA can be microbially produced. Such a microbially produced P3HA is typically a P3HA consisting only of D- (R-) hydroxyalkanoic acid repeating units. Among microbially produced P3HAs, P3HB and P3HB3HH are preferred since they are easy to industrially produce. P3HB3HH is more preferred.

In the case where the P3HA contains 3-hydroxybutyric acid (3HB) repeating units, it is preferable, in terms of the balance between flexibility and strength, that the proportion of the 3HB repeating units be from 60 to 99 mol%, more preferably from 65 to 97 mol%, and even more preferably from 67 to 95 mol% in total monomer repeating units (100 mol%). When the proportion of the 3HB repeating units is 60 mol% or more, the stiffness of the crosslinked resin particles can be enhanced. When the proportion of the 3HB repeating units is 99 mol% or less, the flexibility of the crosslinked resin particles is likely to be enhanced. The monomer proportions in the P3HA can be measured by a method such as gas chromatography (see WO 2014/020838). Two or more P3HAs differing in the proportion of the 3HB repeating units may be used in combination.

The microorganism for producing the P3HA is not limited to a particular type and may be any microorganism having a P3HA-producing ability. The first example of P3HB-producing bacteria is *Bacillus megaterium* discovered in 1925, and other known examples include naturally occurring microorganisms such as *Cupriavidus necator* (formerly classified as *Alcaligenes eutrophus* or *Ralstonia eutropha*) and *Alcaligenes latus.* These microorganisms accumulate P3HB in their cells.

Known examples of bacteria that produce copolymers of 3HB with other hydroxyalkanoates include *Aeromonas caviae* which is a P3HB3HH-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is preferred. Such a microorganism is cultured under suitable conditions to allow the microorganism to accumulate a P3HA in its cells, and the microbial cells accumulating the P3HA are used. Instead of the above microorganism, a genetically modified microorganism incorporating any suitable P3HA synthesis-related gene may be used depending on the P3HA to be produced. The culture conditions including the type of the substrate may be optimized depending on the P3HA to be produced.

The molecular weight of the PHA is not limited to a particular range. The weight-average molecular weight of the PHA is preferably from 50,000 to 3,000,000, more preferably from 100,000 to 2,000,000, and even more preferably from 150,000 to 1,500,000. When the weight-average molecular weight is 50,000 or more, the crosslinked resin particles can avoid having low strength or can avoid being sticky due to a low-molecular-weight component. The PHA having a weight-average molecular weight of more than 3,000,000 could be difficult to produce or to handle for the purpose of the present invention. The above-mentioned values of the weight-average molecular weight are those measured before a crosslinking process of the PHA.

The weight-average molecular weight can be determined as a polystyrene-equivalent molecular weight measured by gel permeation chromatography (GPC; "High-performance liquid chromatograph 20A system" manufactured by Shimadzu Corporation) using polystyrene gels (such as "K-G 4A" and "K-806M" manufactured by Showa Denko K.K.) as columns and chloroform as a mobile phase. In this chromatography, calibration curves can be created using polystyrenes having weight-average molecular weights of 31,400, 197,000, 668,000, and 1,920,000. The columns used in the GPC may be any columns suitable for measurement of the molecular weight.

### <Gel Fraction>

The crosslinked resin particles according to the present embodiment have a crosslinked structure formed by PHA molecular chains linked to each another. Since the amount of such a crosslinked structure is above a certain level, the crosslinked resin particles according to the present embodiment have a high gel fraction, in particular a gel fraction of 50% or more. By virtue of such a high gel fraction, the properties such as hardness, heat resistance, and solvent resistance of the PHA-containing resin particles can be improved.

The gel fraction is preferably 60% or more, more preferably 70% or more, even more preferably 75% or more, and particularly preferably 80% or more. The gel fraction may be 85% or more or 90% or more. The upper limit of the gel fraction is not limited to a particular value, and the gel fraction only needs to be 100% or less. In terms of the efficiency of production of the crosslinked resin particles, the gel fraction is preferably 99.5% or less and more preferably 99% or less. The gel fraction may be 98% or less, 97% or less, or 96% or less.

The gel fraction is measured as follows. The crosslinked resin particles having been dried are added to chloroform to give a concentration of 0.7 wt% and dissolved at 60°C for 30 minutes to obtain a chloroform solution. Subsequently, the chloroform solution is allowed to stand at room temperature for 3 hours, after which the chloroform solution is filtered through a membrane filter having a pore diameter of 0.45 µm. The gel remaining on the filter is dried, and the total weight of the dried gel and the filter is measured. The gel fraction was calculated by the following equation. Gel fraction = (weight of filter carrying dried gel - weight of filter alone)/weight of crosslinked resin particles used for measurement × 100 (%)

### <Mean Diameter>

The crosslinked resin particles according to the present embodiment have a volume mean diameter of 0.1 to 10 µm. By virtue of having such a diameter, the crosslinked resin particles are applicable to various uses as described later. In terms of practical occasions for use, the volume mean diameter is preferably at least 0.1 µm, more preferably at least 0.3 µm, and even more preferably at least 0.5 µm. In terms of productivity (such as the efficiency of production or crosslinking process of the PHA), the volume mean diameter is preferably up to 8 µm and more preferably up to 5 µm.

The volume mean diameter is measured for the crosslinked resin particles dispersed in an aqueous solvent. The measurement device used can be a commonly-used measurement device, an example of which is Microtrac MT3300 EXII manufactured by Nikkiso Co., Ltd.

### <Peroxide>

The crosslinked resin particles according to the present embodiment are not limited to a particular way of crosslinking but are preferably those crosslinked using a peroxide. When a peroxide is used, radicals generated by decomposition of the peroxide act on the molecules of the PHA to link the molecular chains of the PHA directly to each other, with the result that the crosslinked structure can be formed.

The peroxide may be an organic peroxide or an inorganic peroxide. To efficiently increase the gel fraction, an organic peroxide is preferred.

In terms of factors such as the heating temperature and the time in the crosslinking process, the organic peroxide used is preferably at least one selected from the group consisting of a diacyl peroxide, an alkyl peroxyester, a dialkyl peroxide, a hydroperoxide, a peroxyketal, a peroxycarbonate, and a peroxydicarbonate.

Specific examples of the organic peroxide include butyl peroxyneododecanoate, octanoyl peroxide, dilauroyl peroxide, succinic peroxide, a mixture of toluoyl peroxide and benzoyl peroxide, benzoyl peroxide, bis(butylperoxy)trimethylcyclohexane, butyl peroxylaurate, dimethyldi(benzoylperoxy)hexane, bis(butylperoxy)methylcyclohexane, bis(butylperoxy)cyclohexane, butyl peroxybenzoate, butyl bis(butylperoxy)valerate, dicumyl peroxide, di-t-hexyl peroxide, t-butyl peroxy-2-ethylhexanoate, t-butyl peroxyisobutyrate, t-butyl peroxypivalate, t-hexyl peroxypivalate, t-butylperoxymethyl monocarbonate, t-pentylperoxymethyl monocarbonate, t-hexylperoxymethyl monocarbonate, *t*-heptylperoxymethyl monocarbonate, *t*-octylperoxymethyl monocarbonate, 1,1,3,3-tetramethylbutylperoxymethyl monocarbonate, *t*-butylperoxyethyl monocarbonate, *t*-pentylperoxyethyl monocarbonate, *t*-hexylperoxyethyl monocarbonate, *t*-heptylperoxyethyl monocarbonate, *t*-octylperoxyethyl monocarbonate, 1,1,3,3-tetramethylbutylperoxyethyl monocarbonate, *t*-butylperoxy-n-propyl monocarbonate, *t*-pentylperoxy-*n*-propyl monocarbonate, *t*-hexylperoxy-*n*-propyl monocarbonate, *t*-heptylperoxy-*n*-propyl monocarbonate, *t*-octylperoxy-*n*-propyl monocarbonate, 1,1,3,3-tetramethylbutylperoxy-*n*-propyl monocarbonate, *t*-butylperoxyisopropyl monocarbonate, *t*-pentylperoxyisopropyl monocarbonate, *t*-hexylperoxyisopropyl monocarbonate, *t*-heptylperoxyisopropyl monocarbonate, *t*-octylperoxyisopropyl monocarbonate, 1,1,3,3-tetramethylbutylperoxyisopropyl monocarbonate, *t*-butylperoxy-*n*-butyl monocarbonate, *t*-pentylperoxy-*n*-butyl monocarbonate, *t*-hexylperoxy-*n*-butyl monocarbonate, *t*-heptylperoxy-*n*-butyl monocarbonate, *t*-octylperoxy-*n*-butyl monocarbonate, 1,1,3,3-tetramethylbutylperoxy-*n*-butyl monocarbonate, *t*-butylperoxyisobutyl monocarbonate, *t*-pentylperoxyisobutyl monocarbonate, *t*-hexylperoxyisobutyl monocarbonate, *t*-heptylperoxyisobutyl monocarbonate, *t*-octylperoxyisobutyl monocarbonate, 1,1,3,3-tetramethylbutylperoxyisobutyl monocarbonate, *t*-butylperoxy-sec-butyl monocarbonate, *t*-pentylperoxy-*sec*-butyl monocarbonate, *t*-hexylperoxy-*sec*-butyl monocarbonate, *t*-heptylperoxy-*sec*-butyl monocarbonate, *t*-octylperoxy-*sec*-butyl monocarbonate, 1,1,3,3-tetramethylbutylperoxy-*sec*-butyl monocarbonate, *t*-butylperoxy-*t*-butyl monocarbonate, *t*-pentylperoxy-*t*-butyl monocarbonate, *t*-hexylperoxy-*t*-butyl monocarbonate, *t*-heptylperoxy-*t*-butyl monocarbonate, *t*-octylperoxy-*t*-butyl monocarbonate, 1,1,3,3-tetramethylbutylperoxy-*t*-butyl monocarbonate, *t*-butylperoxy-2-ethylhexyl monocarbonate, *t*-pentylperoxy-2-ethylhexyl monocarbonate, *t*-hexylperoxy-2-ethylhexyl monocarbonate, *t*-heptylperoxy-2-ethylhexyl monocarbonate, *t*-octylperoxy-2-ethylhexyl monocarbonate, 1,1,3,3-tetramethylbutylperoxy-2-ethylhexyl monocarbonate, diisobutyl peroxide, cumyl peroxyneodecanoate, di-*n*-propyl peroxydicarbonate, diisopropyl peroxydicarbonate, di-*sec*-butyl peroxydicarbonate, 1,1,3,3-tetramethylbutyl peroxyneodecanoate, bis(4-*t*-butylcyclohexyl) peroxydicarbonate, bis(2-ethylhexyl) peroxydicarbonate, *t*-hexyl peroxyneodecanoate, *t*-butyl peroxyneodecanoate, *t*-butyl peroxyneoheptanoate, *t*-hexyl peroxypivalate, *t*-butyl peroxypivalate, di(3,5,5-trimethylhexanoyl) peroxide, dilauroyl peroxide, 1,1,3,3-tetramethylbutyl peroxy-2-ethylhexanoate, disuccinic acid peroxide, 2,5-dimethyl-2,5-bis(2-ethylhexanoylperoxy)hexane, *t*-hexyl peroxy-2-ethylhexanoate, di(4-methylbenzoyl) peroxide, dibenzoyl peroxide, *t*-butylperoxy-2-ethylhexyl carbonate, *t*-butylperoxyisopropyl carbonate, 1,6-bis(*t*-butylperoxycarbonyloxy)hexane, *t*-butyl peroxy-3,5,5-trimethylhexanoate, *t*-butyl peroxyacetate, *t*-butyl peroxybenzoate, *t*-amyl peroxy-3,5,5-trimethylhexanoate, 2,2-bis(4,4-di-*t*-butylperoxycyclohexyl)propane, and 2,2-di*-t*-butylperoxybutane. One organic peroxide may be used alone, or two or more organic peroxides may be used in combination.

Among the organic peroxides as listed above, *t*-butylperoxyisopropyl monocarbonate, *t*-pentylperoxyisopropyl monocarbonate, *t*-hexylperoxyisopropyl monocarbonate, *t*-butylperoxy-2-ethylhexyl monocarbonate, *t*-pentylperoxy-2-ethylhexyl monocarbonate, *t*-hexylperoxy-2-ethylhexyl monocarbonate, *t*-amylperoxyisopropyl monocarbonate, di-*t*-hexyl peroxide, *t*-butyl peroxy-2-ethylhexanoate, *t*-butyl peroxyisobutyrate, *t*-hexyl peroxy-2-ethylhexanoate, 1,1,3,3-tetramethylbutyl peroxy-2-ethylhexanoate, *t*-butyl peroxypivalate, *t*-hexyl peroxypivalate, *t*-butyl peroxyneodecanoate, *t*-hexyl peroxyneodecanoate, and 1,1,3,3-tetramethylbutyl peroxyneodecanoate are preferred since the use of these organic peroxides allows for efficient crosslinking of the PHA.

To set the heating temperature low in the crosslinking process, the peroxide is preferably a compound having a one-hour half-life temperature of 200°C or lower. The one-hour half-life temperature is more preferably 170°C or lower and even more preferably 140°C or lower. The one-hour half-life temperature may be at least 50°C, at least 60°C, or at least 70°C.

Particularly preferred examples of the organic peroxide having such a one-hour half-life temperature include *t*-butylperoxyisopropyl monocarbonate, *t*-butylperoxy-2-ethylhexyl monocarbonate, di-*sec*-butyl peroxydicarbonate, *t*-butyl peroxy-2-ethylhexanoate, *t*-butyl peroxyisobutyrate, *t*-hexyl peroxy-2-ethylhexanoate, 1,1,3,3-tetramethylbutyl peroxy-2-ethylhexanoate, *t*-butyl peroxypivalate, *t*-hexyl peroxypivalate, *t*-butyl peroxyneodecanoate, t-hexyl peroxyneodecanoate, and 1,1,3,3-tetramethylbutyl peroxyneodecanoate.

When the peroxide is an inorganic peroxide, examples of the inorganic peroxide include hydrogen peroxide, potassium peroxide, calcium peroxide, sodium peroxide, magnesium peroxide, potassium persulfate, sodium persulfate, and ammonium persulfate, which are preferred in view of the heating temperature and the time in the crosslinking process. Among these peroxides, hydrogen peroxide, potassium persulfate, sodium persulfate, and ammonium persulfate are preferred since they are easy to handle and have a decomposition temperature suitable for the heating temperature in the crosslinking process. One inorganic peroxide may be used alone, or two or more inorganic peroxides may be used in combination. Alternatively, an organic peroxide and an inorganic peroxide may be used in combination.

### <Polyfunctional Compound>

The crosslinked structure of the crosslinked resin particles according to the present embodiment may be introduced using only a peroxide or using both a peroxide and a polyfunctional compound. With the use of both a peroxide and a polyfunctional compound, the gel fraction of the crosslinked resin particles can be increased with a reduced amount of the peroxide.

The polyfunctional compound refers to a compound having per molecule two or more functional groups able to crosslink the PHA. The polyfunctional compound is not limited to a particular type but is preferably a compound reactive with radicals generated from the peroxide and particularly preferably a compound having two or more radical-reactive groups per molecule. The radical-reactive groups preferably include at least functional groups selected from the group consisting of vinyl, allyl, acryloyl, and methacryloyl groups.

Examples of the polyfunctional compound include, but are not limited to: allyl (meth)acrylate; allyl alkyl (meth)acrylates; allyloxy alkyl (meth)acrylates; polyfunctional (meth)acrylates having two or more (meth)acrylic groups, such as ethylene glycol di(meth)acrylate, butanediol di(meth)acrylate, triethylene glycol di(meth)acrylate, tetraethylene glycol di(meth)acrylate, polyethylene glycol di(meth)acrylate, trimethylolpropane tri(meth)acrylate, and pentaerythritol (meth)acrylate; divinylbenzene; diallyl phthalate; triallyl cyanurate; triallyl isocyanurate; and divinylbenzene. Preferred are allyl methacrylate, triallyl isocyanurate, butanediol di(meth)acrylate, and divinylbenzene. Particularly preferred are allyl methacrylate and triallyl isocyanurate.

When the crosslinked structure is formed in the presence of a polyfunctional compound, the resulting crosslinked resin particles can usually contain a structure derived from the polyfunctional compound. In this case, the molecular chains of the PHA are linked to each other via the structure derived from the polyfunctional compound.

The crosslinked resin particles according to the present embodiment may consist only of the PHA having a crosslinked structure or may further contain components other than the PHA having a crosslinked structure. Examples of the components other than the PHA having a crosslinked structure include a resin other than the PHA, an antioxidant, a hydrolysis inhibitor, an anti-blocking agent, a nucleating agent, and an ultraviolet absorber.

The proportion of the PHA in the crosslinked resin particles according to the present embodiment is not limited to a particular range and may be 50 wt% or more. The proportion of the PHA is preferably 70 wt% or more, more preferably 80 wt% or more, still even more preferably 90 wt% or more, and particularly preferably 95 wt% or more. The proportion of the PHA may be 99 wt% or more. The upper limit of the proportion of the PHA is not limited to a particular value and may be any value of 100 wt% or less.

Examples of the resin other than the PHA include: an aliphatic polyester having a structure resulting from polycondensation of an aliphatic diol and an aliphatic dicarboxylic acid; and an aliphatic-aromatic polyester formed using both an aliphatic compound and an aromatic compound as monomers. Examples of the aliphatic polyester include polyethylene succinate, polybutylene succinate (PBS), polyhexamethylene succinate, polyethylene adipate, polybutylene adipate, polyhexamethylene adipate, polybutylene succinate adipate (PBSA), polyethylene sebacate, and polybutylene sebacate. Examples of the aliphatic-aromatic polyester include poly(butylene adipate-co-butylene terephthalate) (PBAT), poly(butylene sebacate-co-butylene terephthalate), poly(butylene azelate-co-butylene terephthalate), and poly(butylene succinate-co-butylene terephthalate) (PBST). One of the other resins as mentioned above may be used alone, or two or more thereof may be used in combination.

The crosslinked resin particles according to the present embodiment are preferably unfoamed resin particles unlike foamed resin particles as disclosed in WO 2007/049694 or WO 2019/146555. That is, the crosslinked resin particles are preferably substantially free of internal bubbles.

When the crosslinked resin particles according to the present embodiment are unfoamed particles, the crosslinked resin particles have a relatively high apparent density. The apparent density is preferably more than 0.6 g/cm³, more preferably 0.7 g/cm³ or more, and even more preferably 0.9 g/cm³ or more. The apparent density of the crosslinked resin particles can be determined by a method as described in JIS K 0061 (Test methods for density and relative density of chemical products) or a method as described in JIS Z 8807 (Methods of measuring density and specific gravity of solid).

The average weight per particle of the crosslinked resin particles according to the present embodiment is not limited to a particular range. Since the crosslinked resin particles are small-diameter particles having a volume mean diameter of 10 µm or less, the average weight per particle is much smaller than 0.1 mg.

The crosslinked resin particles according to the present embodiment may be dry particles. The dry crosslinked resin particles may take the form of powder particles, pellets, crumbs, or sheet-shaped particles depending on the drying method.

### <Aqueous Dispersion>

One aspect of the present embodiment may be an aqueous dispersion containing an aqueous medium and the crosslinked resin particles dispersed in the aqueous medium.

The aqueous medium contained in the aqueous dispersion may consist only of water or may be a solvent mixture of water and a water-miscible organic solvent. In the solvent mixture, the concentration of the water-miscible organic solvent is not limited to a particular range and may be any value equal to or lower than the solubility in water of the organic solvent used.

Examples of the organic solvent include, but are not limited to: alcohols such as methanol, ethanol, 1-propanol, 2-propanol, 1-butanol, 2-butanol, isobutanol, pentanol, hexanol, and heptanol; ketones such as acetone and methyl ethyl ketone; ethers such as tetrahydrofuran and dioxane; nitriles such as acetonitrile and propionitrile; amides such as dimethylformamide and acetamide; dimethyl sulfoxide; pyridine; and piperidine. Among these, methanol, ethanol, 1-propanol, 2-propanol, 1-butanol, 2-butanol, isobutanol, acetone, methyl ethyl ketone, tetrahydrofuran, dioxane, acetonitrile, and propionitrile are preferred since they are easy to remove. Methanol, ethanol, 1-propanol, 2-propanol, butanol, and acetone are more preferred since they are easily available. Particularly preferred are methanol, ethanol, and acetone.

The amount of the water in the total aqueous medium contained in the aqueous dispersion is preferably from 5 to 100 wt%, preferably 10 wt% or more, more preferably 30 wt% or more, even more preferably 50 wt% or more, and particularly preferably 70 wt% or more. The amount of the water in the total aqueous medium may be 90 wt% or more or 95 wt% or more.

The concentration of the crosslinked resin particles in the aqueous dispersion is not limited to a particular range and may be, for example, from about 1 to about 60 wt%. The aqueous dispersion may contain a dispersant as described later.

### <Method for Producing Crosslinked Resin Particles>

One exemplary method for producing the crosslinked resin particles according to the present embodiment will be described in detail. The crosslinked resin particles according to the present embodiment can be produced by crosslinking a PHA in the presence of a peroxide in an aqueous dispersion containing particles of the uncrosslinked PHA. To efficiently crosslink the PHA, the aqueous PHA particle dispersion containing the peroxide is preferably heated to a temperature suitable for decomposition of the peroxide.

More specifically, the method for producing the crosslinked resin particles preferably includes the steps of: (1) preparing an aqueous PHA particle dispersion containing uncrosslinked PHA particles dispersed in water; (2) adding a peroxide to the aqueous PHA particle dispersion to impregnate the PHA particles with the peroxide; and (3) heating the aqueous dispersion of the peroxide-impregnated PHA particles to a heating temperature to crosslink the PHA. More preferably, the method further includes the step (4) of maintaining the heating temperature after adding all of the peroxide.

In the step (1), the aqueous PHA particle dispersion may be an aqueous dispersion obtained by culturing a PHA-producing microorganism to accumulate a PHA in the microbial cells, then disrupting the microbial cells in the culture fluid, and separating and removing the cellular components. The aqueous dispersion thus obtained may be concentrated or diluted, and the concentrated or diluted dispersion may be used as the aqueous PHA particle dispersion. When the aqueous PHA particle dispersion is obtained in the above way, the procedures from the PHA particle preparation by culture of the PHA-producing microorganism to the crosslinking process can be carried out without separating the PHA particles from water.

Alternatively, the aqueous PHA particle dispersion can be prepared by dispersing dry PHA particles in water. The aqueous dispersion may contain, in addition to water, a water-miscible organic solvent as described above.

In the aqueous dispersion, the volume mean diameter of the PHA particles is preferably in the same range as the volume mean diameter of the crosslinked resin particles described above. When the PHA particles are those produced by a PHA-producing microorganism, the volume mean diameter of the PHA particles can be usually in the above-specified range; thus, an aqueous dispersion of PHA particles having a desired volume mean diameter can be obtained without the need for any special step for particle diameter adjustment.

The concentration of the PHA particles in the aqueous dispersion is not limited to a particular range and can be chosen as appropriate. The concentration of the PHA particles may be, for example, from about 1 to about 70 wt% and is preferably from about 5 to about 50 wt%.

The aqueous PHA particle dispersion preferably contains a dispersant to enhance the dispersibility of the PHA particles and allow the crosslinking reaction to take place uniformly. Examples of the dispersant include: anionic surfactants such as sodium dioctyl sulfosuccinate, sodium dodecyl sulfate, sodium lauryl sulfate, and sodium oleate; cationic surfactants such as lauryltrimethylammonium chloride; non-ionic surfactants such as glycerin fatty acid esters, sorbitan fatty acid esters, sucrose fatty acid esters, polyoxyethylene alkyl ethers, polyoxyethylene alkyl phenyl ethers, and polyoxyethylene polyoxypropylene glycol; and water-soluble polymers such as polyvinyl alcohol, ethylene-modified polyvinyl alcohol, polyvinylpyrrolidone, methylcellulose, ethylcellulose, hydroxymethylcellulose, hydroxyethylcellulose, polyacrylic acid, sodium polyacrylate, potassium polyacrylate, polymethacrylic acid, and sodium polymethacrylate. One of these dispersants may be used alone, or two or more thereof may be used in combination.

When a dispersant is used, the amount of the dispersant added is not limited to a particular range and may be, for example, from 0.1 to 10 parts by weight per 100 parts by weight of the PHA particles. The amount of the dispersant is preferably from 0.5 to 5 parts by weight and particularly preferably from 0.5 to 3 parts by weight per 100 parts by weight of the PHA particles.

In the step (2), a peroxide is added to the aqueous PHA particle dispersion obtained in the step (1) to impregnate the PHA particles with the peroxide. The peroxide used can be any of those mentioned above. The peroxide added may be in any form such as a solid or liquid. The peroxide added may be a liquid diluted with a diluent or the like. The peroxide may be added all at once or may be added continuously or in batches.

When the peroxide and the polyfunctional compound as described above are used in combination, the polyfunctional compound is preferably added to the aqueous PHA particle dispersion in the step (2). The polyfunctional compound used can be any of those mentioned above. The polyfunctional compound added may be in any form such as a solid or liquid. The polyfunctional compound added may be a liquid diluted with a diluent or the like. The polyfunctional compound may be added all at once or may be added continuously or in batches.

The impregnation of the PHA particles with the peroxide and the optionally-used polyfunctional compound may be accomplished as follows: after or concurrently with the addition of these compounds to the aqueous PHA particle dispersion, the temperature of the aqueous dispersion is set, for example, to a temperature that is 0°C or higher but is lower than the temperature employed in the next step (3) as a temperature suitable for decomposition of the peroxide, and such a temperature of the aqueous dispersion is maintained, for example, for about 1 minute to about 5 hours with stirring of the aqueous dispersion. To be specific, the temperature of the aqueous dispersion during the impregnation may be from about 10 to about 60°C.

The amount of the peroxide used can be chosen as appropriate in view of the gel fraction of the crosslinked resin particles. For example, the amount of the peroxide is preferably from 0.01 to 10 parts by weight, more preferably from 0.1 to 8 parts by weight, even more preferably from 0.3 to 5 parts by weight, and particularly preferably from 0.5 to 3 parts by weight per 100 parts by weight of the PHA particles.

With the production method in which PHA particles are crosslinked using a peroxide in an aqueous dispersion of the PHA particles, it is easy to obtain crosslinked resin particles by allowing the crosslinking to proceed while keeping the particle diameter (volume) the same as before the crosslinking. This could be difficult to achieve by a method in which a resin is crosslinked by melting and kneading it in the presence of a peroxide.

The production method in which PHA particles are crosslinked using a peroxide in an aqueous dispersion of the PHA particles is also advantageous in that the temperature increase due to heat generated during the crosslinking reaction can be easily controlled and that crosslinked resin particles having a safe and stable crosslinked structure (quality) can be efficiently obtained.

The amount of the polyfunctional compound used may also be chosen as appropriate in view of the gel fraction of the crosslinked resin particles. For example, the amount of the polyfunctional compound is preferably from 0.01 to 20 parts by weight, more preferably from 0.05 to 15 parts by weight, even more preferably from 0.1 to 10 parts by weight, still even more preferably from 0.2 to 5 parts by weight, and particularly preferably from 0.3 to 3 parts by weight per 100 parts by weight of the PHA particles.

In the step (3), the aqueous dispersion of the peroxide-impregnated PHA particles is heated to a temperature suitable for decomposition of the peroxide. The heating temperature preferably ranges from a temperature about 25°C below the above-described one-hour half-life temperature of the peroxide to a temperature about 25°C above the one-hour half-life temperature of the peroxide. To be specific, the heating temperature is preferably from 30 to 140°C, more preferably from 50 to 135°C, and even more preferably from 60 to 130°C. With this method, the PHA can be crosslinked at a temperature lower than the melting temperature of the PHA and thus can avoid deterioration caused by heating in the crosslinking process.

In the subsequent step (4), it is preferable to maintain the above heating temperature. This allows for satisfactory completion of the peroxide-mediated crosslinking reaction. The time for which the heating temperature is maintained is not limited to a particular range but is preferably from 1 minute to 15 hours and more preferably from 1 to 10 hours.

After the end of the crosslinking reaction, the crosslinked resin particles are separated from the aqueous dispersion and dehydrated. Thus, the crosslinked resin particles can be obtained as dry particles. The separation of the crosslinked resin particles is not limited to using a particular method and can be accomplished, for example, using filtration, centrifugation, heat drying, freeze drying, or spray drying. For example, with the use of spray drying, the dry crosslinked resin particles can be obtained directly from the aqueous dispersion. After separation from the aqueous dispersion, the crosslinked resin particles may be subjected alone to an extrusion process; in this case, the dry crosslinked resin particles can be obtained as pellets along with complete removal of residual water. An aggregation step using a coagulant or pH adjustment may be carried out.

The aqueous dispersion obtained at the end of the crosslinking reaction is also an aspect of the present invention. The aqueous dispersion obtained at the end of the crosslinking reaction may be concentrated, and the concentrated aqueous dispersion with an increased concentration of crosslinked resin particles is also an aspect of the present invention. The aqueous dispersion obtained at the end of the crosslinking reaction may be diluted by adding an aqueous medium, and the diluted aqueous dispersion is also an aspect of the present invention.

### <Uses of Crosslinked Resin Particles>

The crosslinked resin particles according to the present embodiment are not limited to particular uses and are applicable to the same uses as conventionally known crosslinked resin particles. Specific examples include, but are not limited to, a resin modifier, a rheology modifier for paints or adhesives, a paint pigment, a paper coating material, a delustering agent, an anti-blocking agent, a cosmetic additive, a toner additive, a liquid crystal spacer, a coating agent, a filling material for adhesive tapes, a fiber processing agent, particles for medical diagnosis, and a filler.

The crosslinked resin particles according to the present embodiment are made with a PHA having biodegradability. Thus, they are promising as earth-friendly crosslinked resin particles that can be a solution to problems with waste plastics.

In the following items, preferred aspects of the present disclosure are listed. The present invention is not limited to the following items.

### [Item 1]

Crosslinked resin particles containing a polyhydroxyalkanoate resin, wherein
the crosslinked resin particles have a gel fraction of 50% or more and a volume mean diameter of 0.1 to 10 µm.

### [Item 2]

The crosslinked resin particles according to item 1, wherein the polyhydroxyalkanoate resin is a poly(3-hydroxyalkanoate) resin.

### [Item 3]

The crosslinked resin particles according to item 1 or 2, wherein the crosslinked resin particles are particles crosslinked using a peroxide.

### [Item 4]

The crosslinked resin particles according to any one of items 1 to 3, wherein the crosslinked resin particles are particles crosslinked in the presence of a polyfunctional compound.

### [Item 5]

The crosslinked resin particles according to any one of items 1 to 4, wherein the crosslinked resin particles are unfoamed particles.

### [Item 6]

The crosslinked resin particles according to any one of items 1 to 5, wherein a proportion of the polyhydroxyalkanoate resin in the crosslinked resin particles is 80 wt% or more.

### [Item 7]

The crosslinked resin particles according to any one of items 1 to 6, wherein the gel fraction is from 70 to 100%.

### [Item 8]

An aqueous dispersion containing an aqueous medium and the crosslinked resin particles according to any one of items 1 to 7, the crosslinked resin particles being dispersed in the aqueous medium.

### [Item 9]

A method for producing the crosslinked resin particles according to any one of items 1 to 7, the method including the step of:
crosslinking the polyhydroxyalkanoate resin in the presence of a peroxide in an aqueous dispersion of particles of the polyhydroxyalkanoate resin.

### Examples

Hereinafter, the present invention will be described more specifically using examples. The present invention is not limited by the examples in any respect.

### [1] Measurement Conditions

### 1-1. Weight-average molecular weight

The resin as a measurement object was dissolved in chloroform, and the solution was heated in a hot water bath at 60°C for 30 minutes. The heated solution was passed through a disposable filter made of PTFE and having a pore diameter of 0.45 µm, and the filtrate was then subjected to GPC analysis under the conditions listed below to determine the weight-average molecular weight.
GPC system: High-performance liquid chromatograph 20A system manufactured by Shimadzu Corporation
Columns: K-G 4A (one column) and K-806M (two columns) manufactured by Showa Denko K.K.
Sample concentration: 1 mg/ml
Eluent: Chloroform solution
Eluent flow rate: 1.0 ml/min
Amount of injected sample: 100 µL
Analysis time: 30 minutes
Standard sample: Standard polystyrene

### 1-2. Volume mean diameter

The volume mean diameter of the crosslinked resin particles or base resin particles was measured for a latex of the resin particles. The measurement device used was Microtrac MT3300 EXII manufactured by Nikkiso Co., Ltd.

### 1-3. Gel fraction

The crosslinked resin particles or base resin particles which were dried were added to chloroform to give a concentration of 0.7 wt% and dissolved at 60°C for 30 minutes to obtain a chloroform solution. Subsequently, the chloroform solution was allowed to stand at room temperature for 3 hours, after which the chloroform solution was filtered through a membrane filter having a pore diameter of 0.45 µm. During the filtration process, chloroform was poured on the interior of the container and the filter several times to ensure sufficient washing to prevent a loss. The gel remaining on the filter was dried, and the total weight of the dried gel and the filter was measured. The gel fraction was calculated by the following equation. Gel fraction = (weight of filter carrying dried gel - weight of filter alone)/weight of crosslinked resin particles or base resin particles used for measurement × 100 (%)

### 1-4. Test of biochemical oxygen demand (BOD)

A freeze-crushed sample weighing 25 mg was placed into 250 ml of seawater to which 0.05 g/L of ammonium chloride and 0.1 g/L of potassium dihydrogen phosphate were added. The seawater containing the sample was continuously stirred at 30°C for 91 days, after which the BOD value was determined.

The BOD value determination was conducted by measuring a pressure loss arising from absorption of CO₂ generated by microbial respiration into KOH tablets. The measurement device used was Oxitop (manufactured by Xylem) capable of using a pressure sensor to measure a pressure drop of a gas phase in an airtight container placed under constant temperature conditions.

The BOD value obtained was divided by theoretical oxygen consumption (the amount of oxygen required for complete decomposition into water and carbon dioxide) to calculate the degree of biodegradation (%) in seawater.

### [2] Raw Materials for Crosslinked Resin Particles

### 2-1. Base resin particles

PHA-1: Poly(3-hydroxybutyrate-co-3-hydroxyhexanoate), (3-hydroxybutyrate)/(3-hydroxyhexanoate) = 72/28 (mol/mol), weight-average molecular weight Mw = 70 × 10⁴ to 150 × 10⁴
PHA-2: Poly(3-hydroxybutyrate-co-3-hydroxyhexanoate), (3-hydroxybutyrate)/(3-hydroxyhexanoate) = 89/11 (mol/mol), weight-average molecular weight Mw = 50 × 10⁴
PHA-3: Poly(3-hydroxybutyrate-co-3-hydroxyhexanoate), (3-hydroxybutyrate)/(3-hydroxyhexanoate) = 68/32 (mol/mol), weight-average molecular weight Mw = 70 × 10⁴ to 150 × 10⁴
PHA-4: Poly(3-hydroxybutyrate-co-3-hydroxyhexanoate), (3-hydroxybutyrate)/(3-hydroxyhexanoate) = 75/25 (mol/mol), weight-average molecular weight Mw = 60 × 10⁴ to 150 × 10⁴

### 2-2. Peroxide

PO-1: t-Butyl peroxypivalate ("Luperox 11" manufactured by ARKEMA Yoshitomi Ltd., one-hour half-life temperature = 76°C)
PO-2: t-Butyl peroxy-2-ethylhexanoate ("Luperox 26" manufactured by ARKEMA Yoshitomi Ltd., one-hour half-life temperature = 95°C)
PO-3: *t*-Butylperoxy-2-ethylhexyl monocarbonate ("Perbutyl E" manufactured by NOF Corporation, one-hour half-life temperature = 119°C)
PO-4: Di-*sec*-butyl peroxydicarbonate ("Luperox 225" manufactured by ARKEMA Yoshitomi Ltd., one-hour half-life temperature = 69°C)

### 2-3. Polyfunctional compound

CA-1: Allyl methacrylate
CA-2: Triallyl isocyanurate

### [3] Method for Producing Crosslinked Resin Particles

Crosslinked resin particles according to Examples 1 to 29 were produced by the following procedures in which the raw materials listed in the tables below were used in the amounts shown in the tables.

An autoclave equipped with a stirrer, a baffle, a nitrogen inlet/outlet, and a thermometer was charged with an aqueous dispersion containing the base resin particles dispersed in water (the amount of solids was 100 parts by weight), 200 parts by weight of deionized water, a given amount of peroxide, 2 parts by weight of sodium dioctyl sulfosuccinate, and a given amount of polyfunctional compound. Stirring of the contents of the autoclave was started at room temperature, and at the same time the interior of the autoclave was purged with nitrogen.

After that, the contents of the autoclave were stirred to impregnate the base resin particles with the peroxide and the polyfunctional compound. The stirring temperature and time are shown as impregnation conditions in the tables. The impregnation was followed by heating to a reaction temperature shown as a crosslinking condition in the tables. After the reaction temperature was reached, the reaction was allowed to proceed at the reaction temperature for a reaction time shown as a crosslinking condition in the tables. Thus, an aqueous dispersion containing crosslinked resin particles dispersed in water was obtained.

The pH of the aqueous dispersion was adjusted, and then the aqueous dispersion was dried in an oven to obtain the crosslinked resin particles solidified.

The volume mean diameter and the gel fraction of the crosslinked resin particles obtained in the examples were measured by the methods described above. The results are listed in the tables.

In Comparative Example 1, the volume mean diameter and the gel fraction of the base resin particles not subjected to the crosslinking reaction were measured by the methods described above.

For the crosslinked resin particles obtained in Examples 20 and 22 and commonly available cellulose, in particular microcrystalline cellulose manufactured by Merck (Reference Example), the degree of biodegradation in seawater was measured by the method described above. The results are listed in Table 3.

**[Table 1]**

| | | | Comp. 1 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Raw materials | Base resin particles | | PHA-1 | PHA-1 | PHA-1 | PHA-1 | PHA-1 | PHA-1 | PHA-1 | PHA-1 | PHA-1 | PHA-1 |
| | Peroxide | Type | - | PO-1 | PO-1 | PO-1 | PO-1 | PO-1 | PO-1 | PO-1 | PO-2 | PO-2 |
| | | Amount (parts by weight) | - | 2 | 2 | 2 | 2 | 2 | 3.5 | 2 | 2 | 2 |
| | Polyfunctional compound | Type | - | CA-1 | CA-1 | CA-1 | CA-1 | CA-2 | CA-2 | CA-2 | CA-2 | CA-2 |
| | | Amount (parts by weight) | - | 1 | 1 | 5 | 10 | 5 | 1 | 5 | 1 | 1 |
| Production conditions | Impregnation conditions | Temperature (°C) | - | Room temperature | Room temperature | Room temperature | Room temperature | Room temperature | Room temperature | Room temperature | 50 | 50 |
| | | Time (h) | - | 1 | 1 | 1 | 1 | 1 | 1 | 1 | 1 | 1 |
| | Crosslinking conditions | Reaction temperature (°C) | - | 76 | 94 | 94 | 94 | 94 | 119 | 76 | 119 | 94 |
| | | Reaction time (h) | - | 3 | 1 | 1 | 1 | 1 | 0.17 | 5 | 1 | 3 |
| Volume mean diameter of crosslinked resin particles (µm) | | | 1.7 | 1.7 | 1.7 | 1.7 | 1.7 | 1.7 | 1.7 | 1.7 | 1.7 | 1.7 |
| Gel fraction of crosslinked resin particles (%) | | | 0% | 77% | 82% | 75% | 78% | 83% | 93% | 84% | 97% | 93% |

**[Table 2]**

| | | | Ex. 10 | Ex. 11 | Ex. 12 | Ex. 13 | Ex. 14 | Ex. 15 | Ex. 16 | Ex. 17 | Ex. 18 | Ex. 19 |
|---|---|---|---|---|---|---|---|---|---|---|---|---|
| Raw materials | Base resin particles | | PHA-1 | PHA-1 | PHA-1 | PHA-1 | PHA-1 | PHA-1 | PHA-1 | PHA-1 | PHA-1 | PHA-2 |
| | Peroxide | Type | PO-2 | PO-3 | PO-3 | PO-3 | PO-3 | PO-3 | PO-3 | PO-3 | PO-3 | PO-3 |
| | | Amount (parts by weight) | 2 | 2 | 2 | 5 | 5 | 5 | 5 | 2 | 2 | 2 |
| | Polyfunctional compound | Type | CA-2 | - | CA-1 | CA-2 | CA-2 | CA-2 | CA-2 | CA-2 | CA-2 | - |
| | | Amount (parts by weight) | 5 | - | 5 | 10 | 5 | 2.5 | 1 | 1 | 0.5 | - |
| Production conditions | Impregnation conditions | Temperature (°C) | 50 | 50 | 50 | 50 | 50 | 50 | 50 | 50 | 50 | 50 |
| | | Time (h) | 1 | 1 | 1 | 1 | 1 | 1 | 1 | 1 | 1 | 1 |
| | Crosslinking conditions | Reaction temperature (°C) | 94 | 119 | 119 | 119 | 119 | 119 | 119 | 119 | 119 | 119 |
| | | Reaction time (h) | 4 | 3 | 5 | 3 | 3 | 3 | 3 | 3 | 3 | 3 |
| Volume mean diameter of crosslinked resin particles (µm) | | | 1.7 | 1.7 | 1.7 | 1.7 | 1.7 | 1.7 | 1.7 | 1.7 | 1.7 | 2.4 |
| Gel fraction of crosslinked resin particles (%) | | | 98% | 70% | 77% | 99% | 98% | 97% | 97% | 97% | 98% | 79% |

**[Table 3]**

| | | | Ex. 20 | Ex. 21 | Ex. 22 | Ex. 23 | Ex. 24 | Ex. 25 | Ex. 26 | Ex. 27 | Ex. 28 | **Ex.** 29 | Ref. |
|---|---|---|---|---|---|---|---|---|---|---|---|---|---|
| Raw materials | Base resin particles | | PHA-1 | PHA-1 | PHA-1 | PHA-1 | PHA-1 | PHA-3 | PHA-1 | PHA-1 | PHA-4 | PHA-4 | Cellulose |
| | Peroxide | Type | PO-4 | PO-4 | PO-4 | PO-4 | PO-4 | PO-4 | PO-4 | PO-4 | PO-4 | PO-4 | |
| | | Amount (parts by weight) | 2 | 2 | 2 | 1 | 0.5 | 2 | 2 | 2 | 2 | 2 | |
| | Polyfunctional compound | Type | - | CA-2 | CA-2 | CA-2 | CA-2 | CA-2 | CA-1 | CA-1 | - | CA-2 | |
| | | Amount (parts by weight) | - | 1 | 0.5 | 0.5 | 0.5 | 1 | 1 | 5 | - | 0.5 | |
| Production conditions | Impregnation conditions | Temperature (°C) | Room temperature | Room temperature | Room temperature | Room temperature | Room temperature | Room temperature | Room temperature | Room temperature | Room temperature | Room temperature | |
| | | Time (h) | 1 | 1 | 1 | 1 | 1 | 1 | 1 | 1 | 1 | 1 | |
| | Crosslinking conditions | Reaction temperature (°C) | 75 | 75 | 75 | 75 | 75 | 75 | 75 | 75 | 75 | 75 | |
| | | Reaction time (h) | 3.5 | 3.5 | 3.5 | 3.5 | 3.5 | 3.5 | 3.5 | 3.5 | 3.5 | 3.5 | |
| Volume mean diameter of crosslinked resin particles (µm) | | | 1.7 | 1.7 | 1.7 | 1.7 | 1.7 | 0.7 | 1.7 | 1.7 | ^{,} 1.1 | 1.1 | - |
| Gel fraction of crosslinked resin particles (%) | | | 85% | 95% | 95% | 89% | 80% | 94% | 89% | 94% | 90% | 96% | - |
| Degree of biodegradation at 91st day (result of BOD test) | | | 84% | - | 97% | - | - | - | - | - | - | - | 79% |

It is seen from Tables 1 to 3 that in Examples 1 to 29, crosslinked resin particles were obtained which contained a polyhydroxyalkanoate resin and had a gel fraction of 50% or more and a volume mean diameter of 0.1 to 10 µm. In contrast, in Comparative Example 1 where no crosslinking reaction was carried out, the resin particles had an extremely low gel fraction, which was 0%.

It is also seen from Table 3 that for the crosslinked resin particles obtained in Examples 20 and 22, the degree of biodegradation in seawater over about three months was higher than for cellulose (Reference Example) which is a biodegradable material. This demonstrates that these crosslinked resin particles exhibited high biodegradability.

## Claims

1. Crosslinked resin particles comprising a polyhydroxyalkanoate resin, wherein
the crosslinked resin particles have a gel fraction of 50% or more and a volume mean diameter of 0.1 to 10 µm.

2. The crosslinked resin particles according to claim 1, wherein the polyhydroxyalkanoate resin is a poly(3-hydroxyalkanoate) resin.

3. The crosslinked resin particles according to claim 1 or 2, wherein the crosslinked resin particles are particles crosslinked using a peroxide.

4. The crosslinked resin particles according to claim 3, wherein the crosslinked resin particles are particles crosslinked in the presence of a polyfunctional compound.

5. The crosslinked resin particles according to claim 1 or 2, wherein the crosslinked resin particles are unfoamed particles.

6. The crosslinked resin particles according to claim 1 or 2, wherein a proportion of the polyhydroxyalkanoate resin in the crosslinked resin particles is 80 wt% or more.

7. The crosslinked resin particles according to claim 1 or 2, wherein the gel fraction is from 70 to 100%.

8. An aqueous dispersion comprising an aqueous medium and the crosslinked resin particles according to claim 1 or 2, the crosslinked resin particles being dispersed in the aqueous medium.

9. A method for producing the crosslinked resin particles according to claim 1 or 2, the method comprising the step of:
crosslinking the polyhydroxyalkanoate resin in the presence of a peroxide in an aqueous dispersion of particles of the polyhydroxyalkanoate resin.
